# EUROPEAN PATENT SPECIFICATION

(11) **EP 3 887 256 B1**
(45) Date of publication and mention of the grant of the patent: **06.09.2023**
(21) Application number: 19817610.9
(22) Date of filing: 29.11.2019
(51) Int. Cl.: B64F 1/36, A47L 11/00, A62C 27/00, E01C 23/01, E01H 1/00, E01H 1/10, E01H 1/14, E01H 3/02

(54) **RUNWAY MAINTENANCE APPARATUS**
GERÄT ZUR WARTUNG VON LANDEBAHNEN
APPAREIL DE MAINTENANCE DE PISTE

(30) Priority: 29.11.2018 GB 201819471
(43) Date of publication of application: 06.10.2021
(73) Proprietor: Roboxi AS, 4031 Stavanger (NO)
(72) Inventor: STEINE, Ken Erik, 4045 Hafrsfjord (NO)
(74) Representative: Gill Jennings & Every LLP
(86) International application number: PCT/EP2019/083181
(87) International publication number: WO 2020/109603

(56) References cited:
- CN-A- 105 911 983
- CN-A- 107 390 285
- CN-A- 107 422 390
- CN-B- 104 552 237
- JP-A- 2005 275 723
- US-A- 5 947 636

## Description

The present invention relates to an automated apparatus for monitoring and performing maintenance on airport runways and taxiways.

Maintenance of airport runways and taxiways is a major safety concern in airport operations. The conditions of a runway must be closely monitored to ensure that pilots and air traffic control are kept informed of the current runway conditions and are able to make decisions and adjustments necessary for safe flight operation.

For example, when adverse meteorological conditions cause the runway surface to be wet or icy, a runway friction measurement must typically be carried out to advise pilots and air traffic control of the reduced control and braking power on the runway surface. Other runway conditions, such as runway visibility (RVR) and wind speeds must also be measured. Such measurements can be slow and labour-intensive.

Another major issue which affects airports is build-up of rubber on the runways. When an aircraft lands on a runway, the landing gears experience a substantial frictional force from the ground which causes the rubber on the tyres to polymerize and adhere to the runway surface. As the rubber from landing aircraft accumulates over time, the frictional coefficient of the runway surface becomes diminished, resulting in critical loss in braking and ground handling performance. Airport runways and taxiways must regularly be maintained to minimise the amount of accumulated rubber on the surface. In practice, such maintenance is expensive and time consuming.

A further safety concern is that of foreign object debris (FOD) on the surface of runways and taxiways. Objects on the ground surface, including debris from vehicles, broken equipment and in some cases animals such as birds and rodents, can adversely affect fast-moving aircraft. Taxiway and Runway FOD can cause many serious problems, such as tyre puncture, injury to personnel and path blockage. When ingested in a jet engine for example, FOD can cause serious and substantial damage, often leading to deadly engine failures. Foreign object damage is typically mitigated by performing regular and frequent inspection of the airfield by airport staff. In such inspection operations, vast areas across the runways and taxiways must be swept and closely inspected for FOD, which can often be a lengthy and laborious process, as the airfield must be physically traversed.

The deployment of airport staff to monitor runway and taxiway conditions, manually taking measurements and reporting back to air traffic control, is unreliable, expensive and time-consuming. The problem is exacerbated when adverse conditions on the runway or taxiway are discovered and maintenance staff, together with specialist maintenance equipment, has to be deployed.

There is therefore a need for a solution which allows conditions on the runways and taxiways to be efficiently monitored and maintained.

CN107422390A provides an airport road surface foreign matter intelligent detecting and cleaning system. JP2005275723A provides a mobile vehicle with a foreign matter detecting sensor outputting detection information of foreign matter on a road surface. US5947636A discloses a rapid road repair vehicle. CN105911983A provides a remote-controlled intelligent cleaning vehicle for foreign matters on an airport road surface. CN107390285A discloses a structural light-based airport runway foreign body detection system. CN104552237B provides a robot for treating foreign matters of an airport pavement.

### SUMMARY OF THE INVENTION

Aspects of the invention are provided by the appended claims. Embodiments not falling in the scope of the claims are exemplary.

According to a first example there is provided an aerodrome maintenance apparatus for monitoring runway and taxiway conditions and remotely reporting the status of the runway or taxiway, the apparatus comprising: a drive unit operable to provide self-controlled rolling movement of the apparatus along a surface of a runway or taxiway of the aerodrome; a detection unit comprising one or more sensors configured to detect one or more parameters of the surface; and a communications unit comprising a transceiver arranged to transfer data derived from the detection unit from the apparatus to a remote server, wherein the apparatus is arranged, in use, to move along the surface and transfer data representative of one or more parameters of the surface to a remote server.

The apparatus according to the first example is able to navigate and roam the aerodrome ground surface to collect, via the detection unit, data relating to runway and taxiway conditions. The data can be transferred, via the communications unit, to a remote server for example, where the data may be processed or interpreted and passed on to air traffic control, for example. By having a remote apparatus with the capability to roam and gather aerodrome data, pilots and air traffic control are able to reliably stay updated with the condition of the runways and taxiways. Such an approach removes the need for the laborious process of a manned vehicle being deployed, manually taking measurements and communicating manually the status of the runway. The data collected by the apparatus may include, or be associated with, location information. In particular each data point collected by the apparatus may be linked with location data which represents the geographical location at which the data point was collected. The data relating to the runway collected by the apparatus may be used to generate or update a mapping of the information with respect to the location around the runway. Preferably, a pre-generated map may be stored in memory on-board the apparatus and each data point collected by the apparatus may be mapped on to the pre-generated map using the location data which is associated with that data point.

Whilst the drive unit may comprise any suitable means for providing movement of the apparatus along the aerodrome surface, typically the drive unit may comprise a plurality of independent drive wheels powered by one or more motors.

Movement of the apparatus, through operation of the drive unit, may be manually controlled. For example, the apparatus may be remotely controlled by a remote controller. The remote controller may be operated by a human or machine having knowledge of the surroundings and planned actions of the apparatus. Alternatively, the apparatus may have an on-board sensor. The detection unit may comprise a terrain sensor operable to scan and detect terrain surrounding the apparatus.

The terrain sensor may comprise a Lidar module, having a rotating laser beam arranged to illuminate surrounding terrain and provide a measure of distances between the apparatus and surrounding obstacles. The Lidar module allows the apparatus to autonomously compute a real time 3-D representation of its surroundings, such that the apparatus may safely navigate through the surrounding environment. The terrain sensor may comprise an optical light camera. The optical light camera may be arranged and oriented to capture still or moving images of the terrain surrounding the apparatus. The images from the camera may be processed on-board the apparatus, or transmitted to the remote server where the images can be processed or analysed.

Such a terrain sensor may be used to remotely gather information about the conditions surrounding the apparatus, which can be transmitted back to the remote server. Furthermore, the sensor allows the apparatus to self-sufficiently sense its environment and navigate the surrounding terrain accordingly. For example, the drive unit may be arranged, in use, to use data derived from the terrain sensor to navigate and autonomously effect movement of the apparatus on the surface. By having the apparatus arranged to sense its surroundings and move accordingly, it is possible to provide an efficient aerodrome maintenance apparatus which can simply be turned on and left to roam the aerodrome to perform its functions, without the need for a controller attending the apparatus. The terrain sensor may comprise a LIDAR module arranged to scan and detect the surroundings of the apparatus, and output data representative of the surroundings of the apparatus

The apparatus may be equipped with a radar transmitting and receiving module, to allow the apparatus to communicate with air traffic control and with pilots of nearby aircraft. The radar transmitting and receiving module may utilise the transceiver of the communications unit. The radar module may be arranged to allow the apparatus to detect nearby aircraft and autonomously steer to avoid the aircraft.

In some cases it may be particularly advantageous to provide a means for manual control of the apparatus. The transceiver of the communications unit may be operable to receive instruction information from a remote server. The communications unit may be arranged, in use, to communicate the instruction information to one or more of the drive unit and the detection unit. This allows the drive unit and the detection unit to be remotely operated from a remote server, to provide explicit control of the apparatus.

The apparatus may advantageously comprise one or more measurement instruments for collecting data relating to runway conditions.

The one or more sensors of the detection unit comprise a friction meter arranged to measure and output data representative of a friction level of the surface. With a friction meter on-board, the apparatus is able to take measurements of the runway or taxiway surface and provide pilots and air traffic controllers with an accurate representation of the surface slipperiness which allows them to assess braking power and equipment controllability on the runway and taxiway surface.

Whilst the friction meter may employ any suitable method of measuring friction, typically, the friction meter may comprise a friction measurement wheel arranged, in use, to be in contact with the surface of the runway or taxiway of the aerodrome. The friction measurement wheel may typically be deployed while the apparatus is in motion, and made to come into contact with the ground to produce rotational movement of the wheel. The rotational movement of the friction measurement wheel may be used to calculate a friction level of the surface. The friction level of the surface may be represented by a coefficient of friction, µ. One or more of the drive wheels of the drive unit may be used as a friction measurement wheel of the detection unit. Such an arrangement provides an efficient design with a reduced component count, whilst ensuring safe aircraft operations on the runway. The friction meter may comprise an optical module arranged to provide a measurement of the runway surface friction. Preferably the optical module may comprise an infrared source. The optical source may be configured to transmit radiation directed to the runway surface, to be reflected back to the apparatus and detected by a sensor or detector on-board the apparatus. The optical source may be a laser source.

The one or more sensors of the detection unit may comprise an FOD sensor arranged, in use, to detect the presence of foreign object debris, FOD, on the surface. By equipping the apparatus with an FOD sensor it is possible to provide an efficient way of monitoring the presence of FOD on the runways and taxiways. When FOD is detected by the apparatus, data representative of the FOD may be transmitted to the remote server, such that the pilots and air traffic control can be made aware of the hazard. A remotely operated apparatus with FOD sensing capabilities ensures safe operations on the aerodrome without the need for deploying manned sweepers. The FOD sensor may comprise any one or more sensors selected from the group comprising: an x-ray sensor, a visible light sensor and a metal detection sensor. The FOD sensor may be configured to survey the ground surface of the runway or taxiway. This can be achieved for example by having the FOD sensor oriented towards the surface. Anomalies on the surface may be detected automatically by the apparatus, or by a human observer surveying data from the FOD sensor.

The apparatus may be arranged to provide a measurement of the visual range at the aerodrome. Typically, the apparatus may be configured to measure a runway visual range (RVR). That is, the distance over which a pilot of an aircraft on the centre line of a runway can see the runway surface markings or the lights delineating the runway or identifying the centre line. The detection unit may comprise a transmissometer operable to measure an ambient attenuation of light and output data representative of runway visibility. The detection unit may alternatively comprise a scatter meter operable to measure the RVR. In other examples, an on-board optical camera may be utilised to allow a human observer measurement of RVR. By being equipped with means for measuring visibility, the apparatus can provide an efficient way of remotely measuring visibility on the aerodrome. The transmissometer may be mounted on the apparatus via a gyroscope, or a gimbal, to stabilise the orientation of the transmissometer even while the apparatus is in motion.

The apparatus may comprise one or more fire detectors. Fires on the runways and taxiways present another major hazard in aerodrome safety. The detection unit may comprise a fire detector having an infrared sensor arranged, in use, to monitor ambient thermal radiation and detect fires. Alternatively, the fire detector may comprise a smoke detector, flame detector, or any other means of detecting the presence of a fire in the aerodrome.

Having detected the presence, or absence, of an anomalous condition from the detection unit, the apparatus may typically be operated in response to that detection. Preferably, the drive unit is arranged, in use, to autonomously effect movement of the apparatus based on data derived from the detection unit. The apparatus has the capability to autonomously roam the runways and taxiways of the aerodrome, find and report potential hazards or anomalous conditions and move towards the source of those conditions if required. This significantly improves efficiency of runway monitoring and maintenance operations.

The detection unit may comprise a runway light detector, arranged to detect the presence of runway lights and check the proper functioning of lights on the runway. The detection and checking of the proper functioning of lights may be effected by measuring the luminosity of a region where a runway light is expected and/or detected. Based on the measured luminosity, the proper functioning of the runway light can be checked - for example by checking whether the luminosity exceeds a threshold value or by comparison with historical data.

The apparatus may further comprise a maintenance unit arranged, in use, to perform maintenance operations on the surface of the runway or taxiway of the aerodrome. In addition to the ability to detect and report hazards on the aerodrome runways and taxiways to a remote server, the apparatus itself may have the capability to perform maintenance operations.

The maintenance unit may comprise a rubber removal module arranged, in use, to remove rubber from the surface. The rubber removal module allows the apparatus to deal with the problem of accumulation of rubber on the runways and taxiways from aircraft landing gears, thereby providing a remotely operated solution.

Whilst the rubber removal module may employ any suitable approach for removing accumulated rubber, typically, the rubber removal module may comprise one or more of: a high-pressure water module comprising a water storage tank and a high-pressure nozzle operable to output a jet of high pressure water to the surface; a chemical removal module comprising a chemical storage tank and a chemical applicator operable to apply a removal chemical into the surface; an impactor arranged, in use, to blast high-velocity abrasive particles at the surface; and a mechanical remover comprising a cutter arranged, in use, to mill a layer from the surface.

Whilst the rubber removal module may be operated manually, the removal module may be arranged to also operate when the apparatus detects the presence of rubber on the runway or taxiway. Typically, the rubber removal module may be arranged to conduct removal of rubber from the surface according to a measured surface friction level from the detection unit.

Once the rubber is removed from the surface, the rubber may be swept to one side by the apparatus, or collected for temporary storage within the apparatus. The maintenance unit may therefore comprise a sweeper. The sweeper may comprise a brush or any other means for effectively sweeping debris along, or away from, the surface. Alternatively, or in combination, the maintenance unit may comprise a storage tank. The storage tank may be housed internal to the volume of the apparatus, or external to the volume of the apparatus. The maintenance unit may further comprise a high-powered suction module operable to provide suction to collect debris from the surface into the storage tank. The storage tank may be used to store debris collected by the apparatus. One or more of the enclosing walls of the storage tanks may comprise an inspection window. The inspection window may comprise a transparent or translucent window to allow inspection of the contents of the tank from outside. The storage tank may comprise a sensor arranged to detect and notify when the tank is full.

Similar to the removal of rubber from the surface, the collection of debris can be operated manually or autonomously by the apparatus. Preferably, the maintenance unit may be arranged to conduct removal of rubber or collection of debris from the surface according to data derived from an FOD sensor in the detection unit. The maintenance unit may comprise a debris collection module, operable to collect debris from the runway or taxiway surface. The debris collection module may utilise the high-powered suction module to collect debris from the surface. Alternatively, the debris collection module may comprise a magnetic collector, operable to collect debris from the surface. In some situations, a bolt or other mechanical component can come loose from an aircraft or other equipment, and become FOD on the runway. When the apparatus 1 traverses the runway and finds such loose components, the magnet can be operated to collect the bolt or component as the apparatus drives over it. Alternatively, the magnet can be a permanent magnet or a constant electromagnet, such that metallic FOD can be collected even when undetected, as the apparatus 1 drives over it.

The maintenance unit may further comprise a wildlife repeller arranged, in use, to repel wildlife proximal to the surface. The repeller may comprise one or more of: a laser source operable to emit a laser light; a speaker operable to emit a high-frequency sound; and a spray nozzle operable to output a spray of wildlife repelling chemicals. As discussed above, another major issue in aerodrome safety is the interference of flight operations by wildlife, such as birds, on the runway and taxiways. By providing a means of driving away wildlife, the apparatus can reduce the risk of interference with flight operations such as birds in the jet engine - known as bird strikes. By providing this facility on a moving apparatus, the repelling means can be moved towards the wildlife to better effect dispersal, compared to static repellers. Any laser units installed on the apparatus may be mounted on the apparatus via a gyroscope, or a gimbal, to stabilise the orientation and output beam of the laser even while the apparatus is in motion over rough or smooth terrain.

The laser source of the maintenance unit may also be operable as a laser source of a transmissometer operable to measure an ambient attenuation of light and output data representative of runway visibility.

The maintenance unit may further comprise a fire extinguisher, comprising an extinguishing agent tank and an extinguisher nozzle, operable to controllably release an extinguishing agent from the extinguishing agent tank. The fire extinguisher may be arranged to actuate the release of extinguishing agent from the extinguishing agent tank according to data derived from an infrared sensor in the detection unit. Such an arrangement allows the apparatus to autonomously detect a fire, approach the fire and extinguish the fire by releasing extinguishing agent from the extinguishing agent tank.

Whilst the apparatus may be powered by any suitable means, typically the apparatus comprises a power unit having a rechargeable power source. The rechargeable power source may be charged by a cable connection, induction charging or any other suitable means. Preferably, the apparatus may comprise a solar panel module, arranged to harvest solar energy and provide, in use, charge to the power source.

According to a second example there is provided a system for monitoring and maintaining runway and taxiway conditions, comprising: an apparatus according to the first example; and a remote server arranged, in use, to transfer data to and from the communications module of the apparatus, via a wired or wireless connection.

Furthermore, the system may further comprise a docking station, the docking station being arranged, in use, to receive the apparatus within its volume. The docking station may be positioned on a surface of an aerodrome runway or taxiway. Typically, the docking station may be positioned adjacent to a runway or taxiway of an aerodrome. The docking station can act as a 'home base' for the apparatus, providing a safe shelter for the apparatus to retreat to and be stored.

Typically, the docking station may be operable to provide electrical power to the apparatus. The apparatus may be arranged to automatically return to the docking station once operations have finished. The apparatus may also be arranged to automatically return to the docking station when the power source is low on charge.

According to a third example there is provided a method of monitoring aerodrome runway and taxiway conditions comprising the steps of: deploying an apparatus according to the first aspect to a runway or taxiway; collecting runway condition data through the detection unit of the apparatus; and transferring data derived from the detection unit to a remote server, where the data can be processed and displayed.

The step of deploying the apparatus may comprise remotely controlling the apparatus by transmitting instructions from a remote server to the communications unit of the apparatus. The step of deploying the apparatus may comprise the apparatus autonomously navigating the surface.

Aspects of the present invention, by utilising an autonomous or remotely controlled apparatus having detection, communication and maintenance capabilities, enables efficient monitoring and maintenance of airport runways and taxiways.

### BRIEF DESCRIPTION OF DRAWINGS

An example airport maintenance apparatus will now be described by way of example with reference to the accompanying drawings, in which:
Figure 1 schematically illustrates an example airport maintenance apparatus.
Figure 2 schematically illustrates an example airport maintenance apparatus in use on an aerodrome runway.
Figure 3 schematically illustrates an example airport maintenance apparatus in use on an aerodrome runway.
Figure 4 schematically illustrates an example airport maintenance apparatus in use on an aerodrome runway.
Figure 5 schematically illustrates an example airport maintenance apparatus in use on an aerodrome runway.
Figure 6 schematically illustrates an example airport maintenance apparatus in use on an aerodrome runway.

### DETAILED DESCRIPTION

The following examples illustrate a typical implementation of an apparatus having runway and taxiway monitoring and maintenance capabilities.

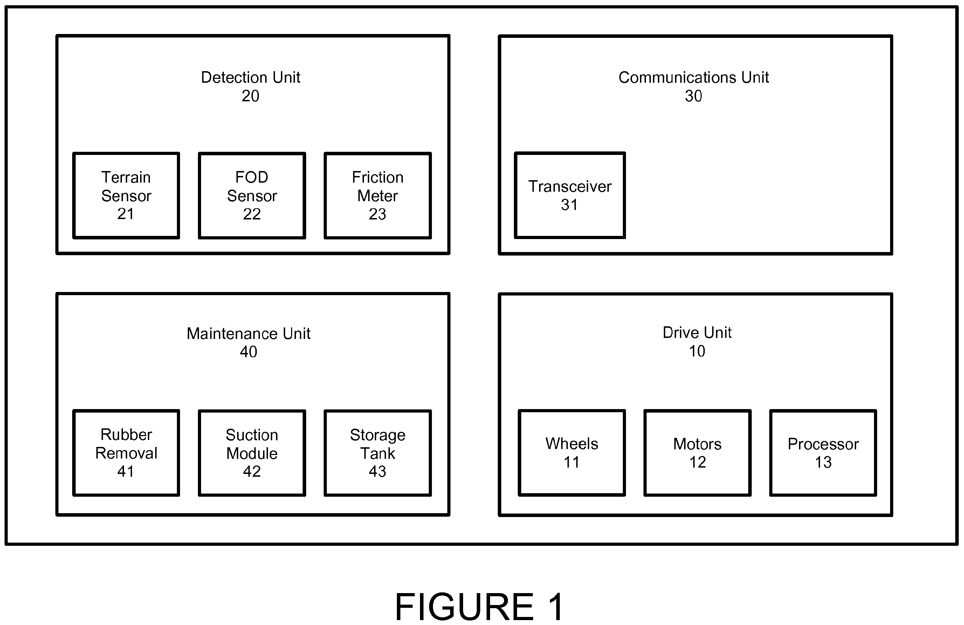

An example airport maintenance apparatus 1 is schematically illustrated in Figure 1. The apparatus 1 comprises a drive unit 10, a detection unit 20, a communications unit 30 and a maintenance unit 40.

The drive unit 10 comprises component parts required for motion of the apparatus 1. In this example, the drive unit 10 comprises a plurality of independent wheels 11, connected to one or more motors 12. The wheels are typically placed at a lower side of the apparatus 1 and are made to contact the ground surface of the runway or taxiway of the aerodrome (referred hereafter simply as 'surface' or 'ground surface').

The wheels 11 and drive motors 12 are arranged so as to provide a full range of motion for the apparatus 1 in the plane of the ground surface. By 'full range of motion' we intend to mean that the apparatus 1, through use of the independently powerable and steerable wheels 11, is able to rotate and turn to any orientation across three-hundred and sixty degrees of rotation on the plane of the ground surface.

In some examples, the drive unit 10 can also comprise a drive processor 13 configured to output a signal to the motors 12 and wheels 11. In some examples, the drive processor 13 is connected to the communications unit 30 to receive and transmit drive data, such as route information and location information. The drive unit 10 can also comprise a stabilising mechanism such as a variable suspension, so as to provide stability to the other components on-board the apparatus 1 when the apparatus 1 is in motion.

The drive unit 10 can be manually operated from a remote server (not shown in Figure 1), to provide manual remote control over the position and movement of the apparatus 1. Alternatively, the drive unit 10 can be configured to operate autonomously. When operating autonomously, the motion of the apparatus 1 due to the drive unit 10 is dependent on a detected geography of the surroundings. As such, the processor 13 of the drive unit 10 is typically connected to the detection unit 20.

The detection unit 20 comprises one or more sensors configured to detect one or more parameters of the ground surface. In one aspect, the detection unit 20 comprises a terrain sensor 21, operable to scan and detect terrain surrounding the apparatus 1. In this example the terrain sensor 21 comprises a Lidar module, having a laser source arranged to output a rotating laser beam. In use, the laser source emits a laser beam which is reflected back to the apparatus 1 by surrounding terrain and obstacles. The Lidar module measures the time taken to receive the reflected beam and calculates the distance to the nearest object or terrain in that direction. By performing such a calculation through all azimuthal angles, the Lidar module is able to output a 2-D or 3-D representation of its surroundings. This allows the apparatus to detect and avoid obstacles to navigate safely through the aerodrome. Data generated by the Lidar module can be processed, either on-board the apparatus 1 or by a remote server, to construct a real-time map of its surroundings. The data can also be used to update and maintain an existing map. The map generated and/or maintained by the apparatus can include the surrounding terrain and also any detected obstacles or vehicles on the terrain. The map can be updated to include information gathered by other components on-board the apparatus, such as the FOD detector or friction meter, as will be explained later. The apparatus 1 can also gather information about its surroundings off-ground, meaning that the apparatus 1 is capable of generating a map of the airspace near the apparatus 1. Information from the Lidar module can be passed from the detection unit 20 to other units such as the drive unit 10 or the communications unit 30.

In some examples, the detection unit 20 comprises a visible light camera comprising an optical sensor arranged to capture a still or moving image of the surroundings. The visible light camera therefore provides visibility of the surroundings of the apparatus 1. The camera can be arranged to detect surrounding terrain for example, and data from the camera can be transmitted to the drive unit 10 which can direct and move the apparatus 1 in a direction according to the sensed terrain. Furthermore, images from the camera can be passed to the communications unit 30 to be transmitted to a remote server, as will be described below. The camera can utilise visible light sensors, infra-red sensors and the like, or combinations thereof.

One advantageous use of the camera on-board the apparatus 1 is for detecting the presence and proper function of lights on the runway. Faulty lights can be detected as a total (or periodic) absence of illumination or a decrease in (or insufficient) intensity of illumination from the runway light. The apparatus 1 can be made to roam the runway or directed to a specific region on the airfield, where the camera can detect the presence (or expected presence) of lights on the runway. The camera can then be used to check the proper function of the lights on the runway and when a faulty light is detected, this can be reported. In one example apparatus 1, the location of detected faulty lights is recorded and mapped so as to track the exact location of these faults. The apparatus 1 can then alert, for example via the communications unit 30, air traffic control to the presence of faults (the alert including the exact location of the faulty lights) so that the lights can then be duly fixed. As a mapping of the lights is maintained within the apparatus 1, the apparatus can periodically return to the recorded location of the faulty light to check whether or not the light has been fixed, and the efficacy of the repair (by measuring intensity of light, for example, before and after the repair). The data can be used by a processor, either on-board the apparatus 1 or remotely, to compare historic data to identify a change. The runway lights can therefore be tracked for proper function over time using a relatively simple system. Whilst the above example has been described using a visible light camera, the same principle can be applied using other means of light detection, for example by infrared camera.

In another advantageous use of the camera (or similar sensing component of the detection unit 20), the apparatus 1 can scan the runway surface for cracks in the surface. As the apparatus 1 travels through the runway, the camera can be used to monitor the runway surface for irregularities. When a crack in the runway surface is detected, the detection unit 20 can send a signal to an on-board processor or to a remote server to alert that a fault in the surface has been detected. The apparatus 1 can map the exact position of the fault by recording the data point against the location information.

While above we mentioned that any sensing apparatus may be used to generate the runway surface map, in preferable embodiments a thermal imaging sensor may be used to generate a map of the heat of the surface of the runway. Similarly, an distance sensor may be used to identify a distance between the surface and a fixed point on the vehicle representing an anomaly in the surface of the runway.

When a particular position on the runway surface is known to have a fault (e.g. a structural weakness, a crack or other irregularity), the apparatus 1 can be programmed to periodically move to that position, take a picture with the camera and record the visual information obtained. The apparatus 1 can return to the same position and take a picture to record and observe the progress of the fault over time. Similarly, the runway surface maps identified above may be updated periodically or more frequently in identified fault areas. This can allow for example the apparatus 1 (or a person controlling the apparatus 1) to observe the development of the fault over time and monitor for the appearance of a potential hazard. By mapping the faults over time it is possible to have a real-time map of all of the potential faults or hazards on the runway surface. A map generated by data derived from measurements by the apparatus 1 can be used to compare to previous maps to spot any differences or changes in conditions. These changes can be alerted via the communications unit 30 to a user or remote server. In addition to faults in the runway surface, other properties of the runway can also be mapped - for example runway friction which, as described below, can be measured by the apparatus 1.

The detection unit 20 further comprises an FOD sensor 22. The FOD sensor 22 is arranged, in use, to detect the presence of FOD on the ground surface. In this example, the FOD sensor 22 comprises an x-ray camera. The x-ray camera comprises an x-ray sensor arranged to capture a still or moving image of the surroundings using x-ray radiation.

In addition to various optical and radiation detectors, the detection unit 20 can also comprise measurement instruments to perform physical measurements of various runway parameters. In this example the detection unit 20 comprises a friction meter 23. The friction meter 23 comprises a wheel 23a that is arranged, in use, to come into contact with the ground surface. The friction meter 23 measures the reaction of the wheel 23a to directly measure and calculate the level of friction. Typically, the friction meter 23 outputs a measured coefficient of friction (µ) between the ground surface and the wheel. In some examples the wheel used for the friction meter 23 is the same as one or more of the wheels 11 in the drive unit 10. In other examples, the friction meter 23 comprises other means for measuring the surface friction, in some cases using non-contact temperature measurement techniques. In an example using a simple roughness measurement, a laser and sensor pair can be arranged to measure for example the surface roughness (via distance-time measurements of reflected rays) and the roughness can be used to derive a surface roughness. In other examples, more complex techniques can be employed to provide non-contact measurement of runway surface friction. For example the friction meter 23 can comprise an infrared sensor arranged to provide a measurement of surface friction. This can be achieved for example using the fact that most of the energy losses due to friction are released as heat energy. The infrared sensor can therefore be employed to measure the heat energy lost from a surface and, using a calibrated model for example, derive the surface friction level. The infrared sensor may comprise an infrared laser, stabilised on the apparatus 1 via a gimbal so as to allow the laser to be used without loss of alignment when the apparatus 1 is in motion. In use, the laser can provide a source of infrared (or otherwise) radiation to be reflected back to the apparatus. The infrared sensor can measure parameters relating to the reflected radiation (e.g. intensity) to generate the infrared sensor data. Data from the infrared sensor can be fed to the on-board processor, or sent to a remote server, where the data can be processed to derive the surface friction level. In some examples, the apparatus 1 can comprise multiple technologies for measuring runway surface friction - for example both a measurement wheel 23a and an infrared laser source. The apparatus 1 may record measurements from both the wheel 23a and the laser simultaneously.

When a hazardous (low) level of friction is detected on a runway, for example due to the presence of ice or frosting on the runway surface, a chemical is normally applied to the runway surface to mitigate or counteract the lack of traction on the runway surface. In the case of ice on the runway, a de-icing chemical is normally applied by a runway chemical application vehicle. An existing problem in the art is that it is not always possible to know if a sufficient or excessive level of chemical has been applied to suitably deal with the hazard. In one example apparatus, the detection unit is provided with one or more chemical tracers for monitoring the amount of chemical applied to the runway surface. Typically, the chemical tracer comprises an infrared camera (or utilises an infrared camera of another component of the apparatus). Data derived from the chemical tracer, along with data derived from other components of the detection unit, for example the friction meter 23, can be processed by the on-board processor (or a remote server) to determine whether an appropriate amount of chemical has been applied to the runway surface. The measured levels of friction and levels of chemical applied to the surface can be compared with pre-recorded historical data which indicates the expected friction level for a given amount of applied chemical. If it has been determined that there is an insufficient amount of chemical applied (i.e. the runway is still too slippery after application of the chemical), then the apparatus can flag an alarm via the communications unit to alert air traffic control, for example. The apparatus 1 can be programmed to follow an airport runway chemical application vehicle so as to make measurements with the chemical tracer immediately following application by the application vehicle. In some examples the apparatus 1 itself can be arranged, through the maintenance unit 40, to apply the chemical to the runway.

In addition to the above functionality relating to friction measurement, or as an alternative, an infrared sensor on-board the apparatus can be arranged to detect levels of heat in the surroundings, for example to detect a fire in the airfield. For example, a set threshold temperature may be stored on the on-board processor (or on a remote server). If the data gathered by the infrared sensor exceeds the set threshold temperature value then the apparatus 1 can generate an alert to signal a potential fire. In some examples, when the apparatus 1 detects a potential fire the apparatus 1 carries out an action - for example move to the fire by the drive unit 10 and extinguish the fire by on-board fire extinction functionalities in the maintenance unit 40 (described later).

In addition to the above functionalities, the detection unit 20 can also comprise functionality to detect chemical parameters on the runway. For example, contact and/or non-contact techniques can be employed to perform chemical analysis of the runway surface. The detection unit 20 can scan the runway surface, for example using a non-invasive technique such as by on-board camera, to provide data relating to the levels of a certain chemical on the surface. The data generated may relate to levels of complex chemical compounds, or simple structures such as water. Data generated by a chemical analysis module in the detection unit 20 can be sent to an on-board processor (or to a remote server) and the apparatus 1 can take action depending on the processed chemical analysis data. For example, in reaction to a detected low level of additive or chemical on a part of the runway surface, the apparatus 1 can apply a new layer of the required additive/chemical to that part of the runway surface.

Data from the detection unit 20 can be used to map aspects of the runway on which the apparatus 1 is deployed. For example, the terrain sensor 21 can be used to scan the surroundings of the apparatus 1 to generate a map (or alternatively a pre-generated map can be provided to the apparatus 1) and the FOD sensor 22 can be used to scan the surroundings of the apparatus 1 so as to map the location of any debris or obstacles on to the generated (or otherwise stored) map. The mapping can be done by an on-board processor, or alternatively the data gathered by the apparatus 1 can be sent to a remote server where the mapping can take place remote from the apparatus 1. The scanning described above can be done on an ad-hoc basis, or alternatively the apparatus 1 can be programmed or instructed to attend to particular locations on the runway (or to simply 'roam' or 'patrol' all available regions of the runway) to perform regular or scheduled scans of the local surroundings.

In one particularly advantageous example, at least a part of the detection unit 20 is provided as a module which is removably mounted to the surface of the apparatus 1. The module can for example be mounted on slidable rails provided on the surface of the apparatus 1. The module can be provided as a bar for example in which all, or some, of the components of the detection unit can be placed. The bar can then be mounted on the apparatus 1 such that it overhangs an edge - typically the front edge - of the apparatus 1. Sensors in the bar can be directed downwards towards the runway surface and arranged such that it has 360 degree line of sight around the apparatus 1.

In one example apparatus, two or more detection units 20 can be installed on the apparatus 1. For example, one detection unit 20 can be placed at a front end of the apparatus - to check the status of the runway in front of the apparatus 1 - and a second detection unit 20 can be placed at a rear end of the apparatus. The detection unit 20 at the rear end of the apparatus can provide means to check the conditions of the runway at a later time. For example, the second detection unit 20 can be arranged to check how the apparatus 1 and its functions has changed the conditions of the runway once the apparatus has passed over a detected fault.

The detection unit 20 is connected to the communications unit 30 and the drive unit 10 such that data from the one or more sensors within the detection unit 20 can be passed to the communications unit 30 or the drive unit 10.

The communications unit 30 is arranged to handle the exchange of information to and from the apparatus 1. The communications unit 30 comprises a transceiver 31 arranged to communicate with a remote server. The transceiver 31 is typically arranged to transfer data derived from the detection unit 20 from the apparatus 1 to the remote server. The transceiver 31 is also arranged to receive information, such as movement instructions relating to the operation of the drive unit 10, data collection instructions relating to the operation of the detection unit 20 and maintenance information relating to the operation of the maintenance unit 40. Data from a remote server, received at the transceiver 31, is typically passed on to one of the drive 10, detection 20, or maintenance 40 units for specific action. Typically, the apparatus comprises a memory unit 50 arranged to allow temporary or permanent storage of data gathered by the apparatus 1 itself, or data communicated to the apparatus by a remote server. Data measured by the measurement unit 20 can be continuously recorded to the memory unit 50, and each new measurement made by the measurement unit 20 can be compared with historical data. The apparatus can take one of several actions based on the result of the comparison, such as raise an alarm, change the frequency of detection, or change the movement plan of the apparatus around the runway. In one example, when a measurement of friction is made at a particular position on the runway, the measured friction level can be compared with previous measurements of friction made at the same position. In another example, when assessing quality of the runway surface (e.g. checking for cracks or faults in the surface), each time a measurement or photo is taken of the runway quality in a given position, the measurement or photo can be compared with previous measurements or photos taken at the same position. If the comparison shows the development of a crack or fault in the runway surface, the apparatus can send an alert via the communications unit 30 to air traffic control. Historical comparisons can be made with respect to data stored on the memory unit 50 on-board the apparatus 1, or alternatively comparisons may be made with respect to data stored in the remote server.

The transceiver 31 can be arranged to provide long-range or short-range communication between the apparatus 1 and a remote server. For example, the transceiver 31 can be arranged to provide long-range radio communications. In other examples, the transceiver 31 is arranged to provide short-range communications using local area technologies such as Wi-Fi or Bluetooth.

In this example, the communications unit 30 further comprises a radar module 32 arranged to allow radar communication between the apparatus 1 and an external radar operator such as an air traffic control tower. Typically, the radar module 32 comprises a radio frequency transmitter and receiver. The radar module 32 allows the apparatus to communicate via radio waves to an external equipment or entity. This is particularly useful in airfields where radar transmission is often the main mode of communication between moving vehicles and air traffic control. Whilst the example shows the radar module 32 being a separate module to the transceiver 31, in some examples the transceiver 31 itself can be arranged to provide radar communications.

In some examples, the communications unit 30 comprises a screen to allow a nearby user to see information provided by the apparatus 1.

The maintenance unit 40 is arranged to allow the apparatus 1 to perform various maintenance operations, typically in response to parameters observed by the detection unit 20, or in response to instructions from the communications unit 30.

In this example, the maintenance unit 40 comprises a rubber removal module 41, arranged, in use, to remove rubber from an area of ground surface proximal to the apparatus 1. By 'proximal' in this context we of course intend to mean the ground surface under or near a lower side of the apparatus 1.

Removal of rubber from an airfield surface can be performed in one or more of a number of ways: high pressure hydrocleaning, chemical removal, high velocity impact removal or mechanical removal. The apparatus 1 in this example is equipped with means for removing rubber employing any one of the above approaches.

In this example, the rubber removal module 41 comprises a high-pressure water module 41a. The water module 41a comprises a water storage tank and a high-pressure nozzle acting as a jet applicator, arranged to produce a jet of high pressure or ultra-high pressure water. In use, high pressure (and, typically, high temperature) water is blasted onto the ground surface by the nozzle of the water module 41a to apply a substantial force on the layer of rubber on the ground surface. Typically, the water module 41a produces jets of water having pressures of between 15,000 kPa to 300,000 kPa. The layer of rubber experiences a large impact force due to the high pressure water, and becomes accelerated away from the surface thereby being removed by the impact of water. Once detached loose from the ground, the rubber can be swept or collected by the apparatus 1. Collection of loose rubber may be facilitated by a high-powered suction module 42. Collected pieces of rubber may be temporarily stored on a storage tank 43, until the apparatus 1 is moved to a position where the stored rubber can be ejected from the tank 43 to dispose of the removed rubber.

The rubber removal module 41 further comprises a chemical removal module 41b. The chemical removal module comprises a chemical storage tank and a chemical applicator operable to apply a removal chemical into the ground surface. In use, the chemical storage tank feeds a removal chemical to the chemical applicator, which in turn applies a chemical to the accumulated rubber on the ground surface. Once applied, the removal chemical reacts with and breaks down the rubber accumulated on the airfield surface. The rubber becomes loose and can be washed off with low pressure water, or collected into the tank 43 by the suction module 42.

The rubber removal module 41 further comprises an impactor 41c. The impactor 41c is arranged to blast abrasive particles at a high velocity at the proximal ground surface. In use, the abrasive particles ejected by the impactor 41c collide with the rubber on the proximal ground surface. The high velocity impact of the abrasive particles on the rubber causes the rubber to come loose from the ground surface, and the rubber can then be swept or collected in the manners described above.

The rubber removal module 41 further comprises a mechanical remover 41d. The mechanical remover 41d comprises a cutter arranged, in use, to mill an upper layer of the proximal ground surface. The cutter of the mechanical remover 41d is typically arranged to remove layer having a thickness of about 3 mm to 5 mm from the proximal ground surface. By removing a layer of the ground surface entirely, the accumulated rubber can be forcefully removed from the airfield. The ground layer milled by the cutter can be swept or collected in the manners described above.

Any one or combination of methods described can be utilised by the rubber removal module 41. For example, the water module 41a can be used alone, or in conjunction with the chemical applicator 41b.

The maintenance unit 40 can also include components which provide functionality for the apparatus 1 to obtain physical or chemical samples for analysis. For example, the rubber removal module 41 can be configured to allow the apparatus 1 to extract a quantity of rubber from the runway surface to perform chemical analysis of the rubber. The analysis can be performed on-board the apparatus 1, or alternatively the sample can be stored on-board and transported to a lab to be analysed at a later time.

The maintenance unit 40 can also apply chemicals to the runway surface to aid analysis by the detection unit 20. For example, the chemical storage tank of the maintenance unit 40 may comprise inspection fluid which comprises an indicator. The inspection fluid can be sprayed by the apparatus 1 to a part of the runway to be inspected. The fluid will enter any cracks present on the runway surface, and will be visible under certain conditions. The detection unit 20 can then perform a scan of the part to be inspected, for example by viewing the part of the runway surface under infrared conditions. The indicator may for example be arranged to glow or provide illumination when viewed under infrared conditions. In some examples the indicator may comprise magnetic particles. By using an infrared sensor (or camera), it is possible to see the regions where the inspection fluid is concentrated, and the apparatus can therefore detect where cracks are present on the runway surface.

In addition to the drive unit 10, detection unit 20, communications unit 30 and maintenance unit 40, the apparatus comprises a power unit 60. The power unit 60 comprises a rechargeable power source 61, connected to a charging port 62. In this example, the rechargeable power source 61 is connected to an array of solar panels 63 such that the power source can be recharged by harvesting solar energy through the panels 63. In other examples, other means of regenerating energy (such as a kinetic energy harvester; 'dynamo') are connected to the power source 61 to provide on-board recharging capabilities.

In practice, when the apparatus 1 is not in the operative configuration, the apparatus 1 is typically housed in a docking station 2 positioned on, or adjacent to a runway or taxiway of an aerodrome. The docking station 2 is typically arranged to receive the apparatus 1 within its volume, and provides shelter to protect the apparatus 1 from weather conditions and falling debris. The docking station 2 also provides a charging port to provide charge to the power unit 60 the apparatus 1. Furthermore the docking station 2 can also be provided with a docking station communications unit, operable to provide a wired or wireless means of transferring data to and from the apparatus 1. The docking station communications unit can be arranged to transfer data from the apparatus 1 to a remote server, which can be provided within the docking station or further afield from it.

The apparatus 1 is programmed to return, or 'home in', to the docking station 2 after use. In other words, the apparatus 1 is aware of the position of the docking station 2 and will autonomously return to the docking station 2 after operation. In the case that a single aerodrome comprises multiple docking stations 2, the apparatus 1 is typically programmed to return to the nearest docking station 2 or an allocated docking station 2.

Each of the units herein may comprise a processor adapted to execute instructions stored on a suitably programmed memory in order to perform the described functionality. Similarly, each unit may be in communication with a control unit operable to instruct or otherwise control operations of the unit. The functions of each unit may be interchangeable or modular. Each one of the units, in its entirety or in part, can be arranged to modularly assemble with another one of the units or the apparatus itself. For example, the detection unit can comprise a portion which has a connection member. The connection member can have a complementary shape to a connection member on a surface of the apparatus to which it can fit in. A typical connection of this kind involves one or more rails provided on a surface of the apparatus. One or more protrusions on the detection unit 20 can provide the connection member which allows the detection unit 20 to be slotted in, like a horseshoe connection for camera flashes, into the rails provided on the apparatus.

Methods and processes described herein can be embodied as code (e.g., software code) and/or data. Such code and data can be stored on one or more computer-readable media, which may include any device or medium that can store code and/or data for use by a computer system. When a computer system reads and executes the code and/or data stored on a computer-readable medium, the computer system performs the methods and processes embodied as data structures and code stored within the computer-readable storage medium. In certain embodiments, one or more of the steps of the methods and processes described herein can be performed by a processor (e.g., a processor of a computer system or data storage system). It should be appreciated by those skilled in the art that computer-readable media include removable and non-removable structures/devices that can be used for storage of information, such as computer-readable instructions, data structures, program modules, and other data used by a computing system/environment. A computer-readable medium includes, but is not limited to, volatile memory such as random access memories (RAM, DRAM, SRAM); and non-volatile memory such as flash memory, various read-only-memories (ROM, PROM, EPROM, EEPROM), magnetic and ferromagnetic/ferroelectric memories (MRAM, FeRAM), and magnetic and optical storage devices (hard drives, magnetic tape, CDs, DVDs); network devices; or other media now known or later developed that is capable of storing computer-readable information/data. Computer-readable media should not be construed or interpreted to include any propagating signals.

One of the ways in which the processor can be utilised in the apparatus is for a scanning and mapping functionality. As noted above, various components of the apparatus 1 - particularly of the detection unit 20 - can be used to gather data to generate a map of hazards and characteristics of the runway.

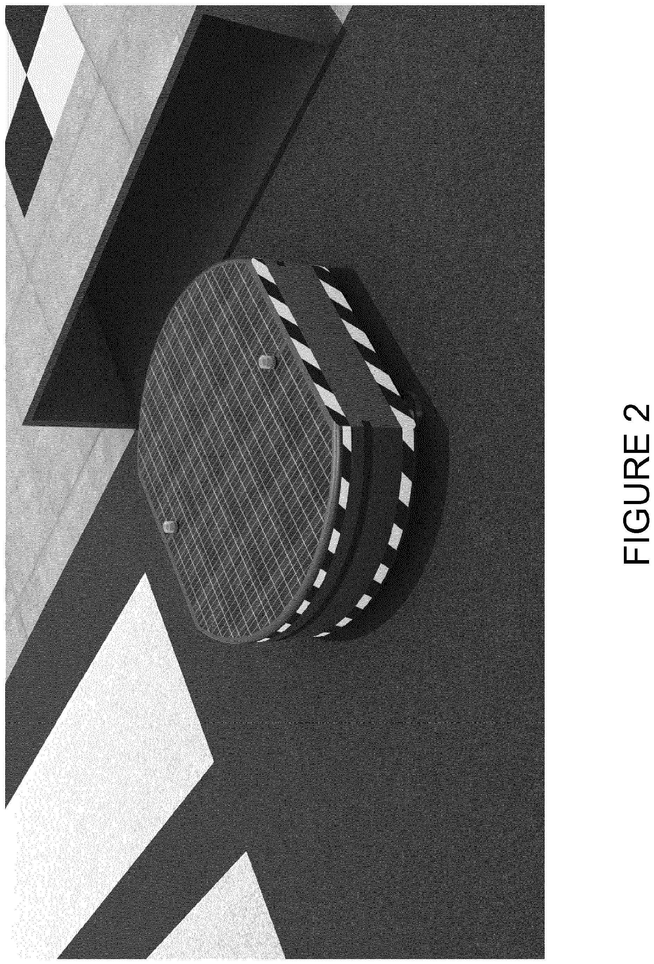

A typical operation of an example apparatus in an aerodrome will now be described with reference to Figures 2 to 6, each of which shows an example implementation of functionality provided by the apparatus 1.

The apparatus 1 is typically stored in a non-operative configuration in a docking station 2 on, or adjacent to, a runway or taxiway of an aerodrome. The apparatus 1 can be activated manually from a remote server. Alternatively, the apparatus 1 is activated according to a pre-determined schedule.

When activated, the apparatus 1 leaves its docking station 2 to make its way onto a runway or taxiway of the aerodrome. As described above, movement of the apparatus 1 can be remotely controlled or autonomously effected. In this example, the apparatus 1 operates its detection unit 20 and drive unit 10 to effect autonomous movement.

The terrain sensor 21 of the detection unit 20 detects the surrounding terrain to compute the scope of movement. The drive unit 10 then operates the one or more motors 12 and wheels 11 to move the apparatus 1 out of the docking unit 2. Figure 2 illustrates the apparatus 1 emerging out of the docking unit 2, which is positioned directly adjacent to a runway of the aerodrome.

On the runway, the FOD sensor 22 on-board the apparatus 1 searches for FOD on the ground surface. The FOD sensor 22 is arranged to scan the runway surface and detect debris and build-up of rubber from aircraft landing gear. When debris is detected on the runway, the apparatus 1 can move, by operating the drive unit 10, to the debris and collect or sweep to one side the debris. The apparatus 1 is equipped with a means for collecting FOD. In this example, a magnet is operable to collect debris into the storage tank 43.

Supposing, for example, that a runway in an aerodrome has experienced a build-up of rubber due to landing aircraft, the apparatus 1 can be directed to the runway by an air traffic controller to sweep the runway and monitor the levels of friction. As the apparatus 1 traverses the runway, the FOD sensor 22 surveys the runway surface for rubber build-up and debris on the runway. The friction meter 23 also performs measurements to survey the friction levels of the runway surface. When the detection unit 20 determines that there is an excessive build-up of rubber on the runway (by, for example, comparing measured values against a set of threshold values), the apparatus 1 reports this information through the communications unit 30 to the remote server, which in turn can alert traffic control. The apparatus 1 then autonomously operates the drive unit 10 to advance the apparatus 1 towards the region of rubber build-up, and begins maintenance to remove the rubber from the surface.

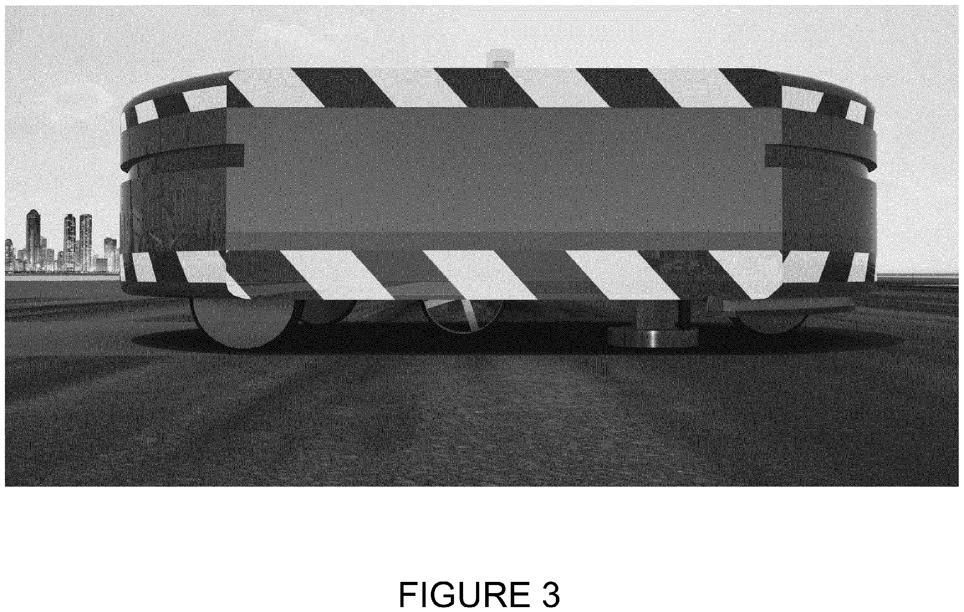

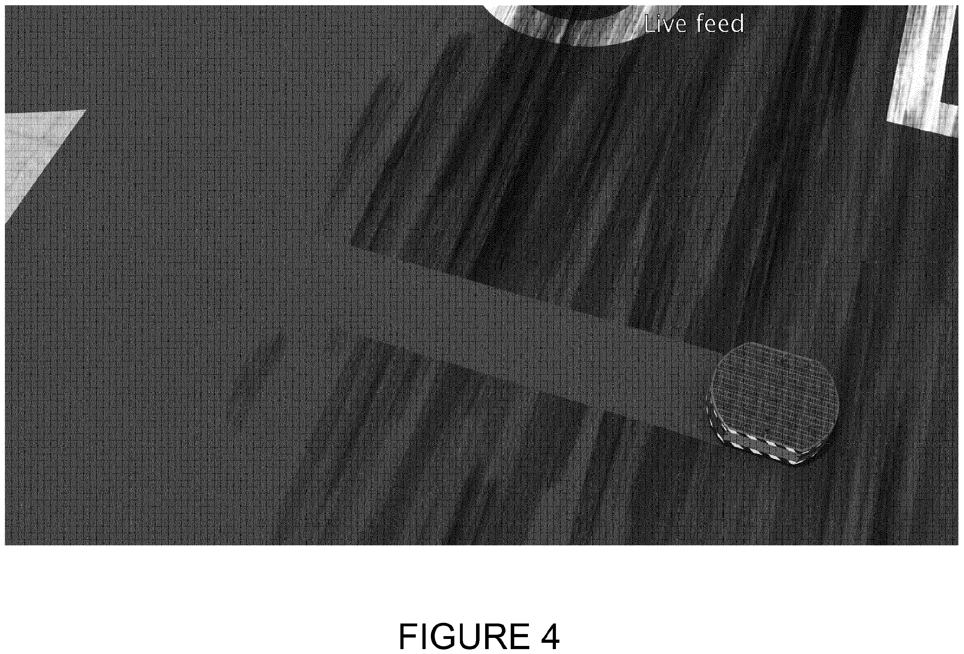

As the apparatus 1 approaches the region of rubber build-up on the runway, the rubber removal module 41 is engaged to the runway surface, as shown in Figure 3. The rubber removal module 41, using any one of the approaches described above, operates to remove rubber from the runway surface. As can be seen from Figure 3, the friction meter 23 can be deployed simultaneously, to allow the apparatus 1 to confirm the results of the operation of the rubber removal module 41. The friction measurement wheel 23a of the friction meter 23 is made to contact the ground surface proximal to the apparatus 1 and arranged to produce a measure of the friction level of the surface. As the rubber removal module 41 operates to reduce or eliminate the accumulated rubber on the runway, the drive unit 10 advances the apparatus 1 to regions or greater build-up. Rubber removed from the surface is either swept by the apparatus or collected by the on-board high power suction module 42 in to the storage tank. In the process, the apparatus 1 removes a significant proportion of the rubber build-up on the runway surface, as shown in Figure 4, effectively 'sweeping up' the rubber from the runway surface. The apparatus 1 continues to traverse the runway, detecting debris and rubber build-up, removing the rubber and collecting the loose rubber.

As described above, wildlife such as birds and deer can often trespass onto runways and taxiways, presenting safety hazards and causing unwanted delays. Through the detection unit 20, the apparatus 1 monitors the runways and taxiways for trespassing wildlife. This can be achieved by utilising the FOD sensor 22, or a visible light camera for example, to scan the taxiways and runways for potential objects. Data from the FOD sensor or camera can be analysed by the apparatus itself through on-board processors, or transmitted via the communications unit 30 to a remote server where the data can be analysed by traffic control, for example.

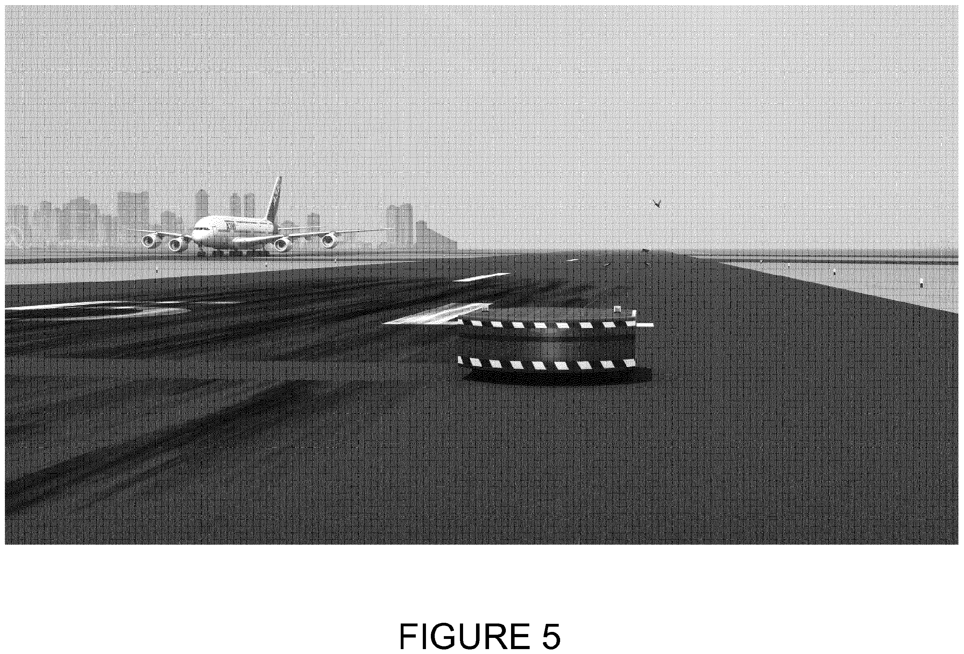

When the detection unit 20 detects the presence of wildlife on the runway, the apparatus 1 deploys a wildlife repelling means to repel the wildlife from the runway. The apparatus 1 can be configured to drive, by the driving unit 10, the apparatus 1 towards any (or a selected one or more of) birds based on data from the detection unit 20. For example a camera in the detection unit 20 may detect the presence of a plurality of birds. One or more of the birds can be selected as being high priority (either by a decision-making algorithm on-board the apparatus 1 or otherwise through a remote server via the communications unit 30) such that the apparatus 1 approaches the selected birds first. Figure 5 illustrates the apparatus 1 utilising an on-board laser source to direct a laser beam at the birds on the runway. The lasers have been found to be effective at scaring the birds and causing them to move away from the runway surface, thus reducing the risk of flight problems caused by wildlife such as bird strikes. The apparatus 1 is fitted with a laser hood to ensure that the laser light does not inadvertently become directed into a cockpit of an airplane. The laser can be outfitted with a gyroscopic device, or mounted on the apparatus 1 via a gimbal, so as to stabilise the output beam and/or corresponding imaging device. Such an approach allows the laser to be used when the apparatus is in motion across the runway, such that the laser device can produce a coherent and stabilised beam even when the apparatus 1 is in motion over rough or uneven terrain.

Suppose, for example, the apparatus 1 detects that a fire has occurred at an aircraft wheel, or that an aircraft wheel is at an anomalously high temperature.

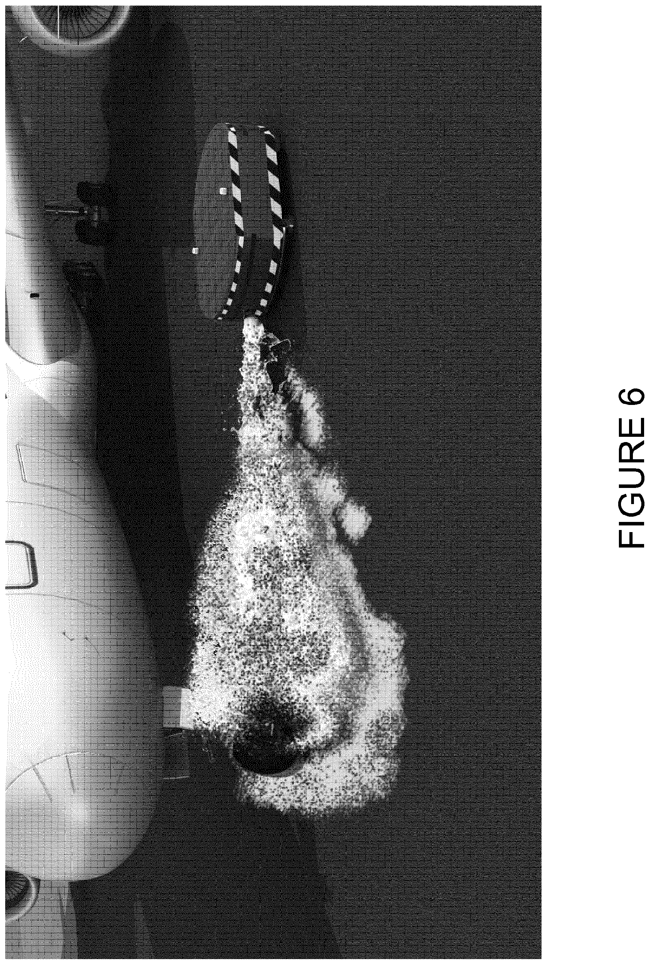

Such a situation may occur due to landing faults, for example. The apparatus would monitor for such an occurrence and, having detected it, would automatically dispatch itself towards the source of the fire or high temperature. Alternatively, the apparatus 1 can be guided remotely to the source of the fire and remotely triggered to deploy its fire extinguishing chemicals thus reducing the risk for aerodrome personnel and dramatically improving fire reaction time. As illustrated in Figure 6, the apparatus is able to be guided into proximity with the fire hazard without risk to human life. In an advantageous example, the fire can be reported by the aircraft to automatically ready or otherwise deploy the apparatus to the hazard location to mitigate the potential hazard.

## Claims

1. An aerodrome maintenance apparatus (1) for monitoring runway and taxiway conditions and remotely reporting the status of the runway or taxiway, the apparatus comprising:
a drive unit (10) operable to provide self-controlled rolling movement of the apparatus along a surface of a runway or taxiway of the aerodrome;
a detection unit (20) comprising one or more sensors (21-23) configured to detect one or more parameters of the surface; and
a communications unit (30) comprising a transceiver (31) arranged to transfer data derived from the detection unit from the apparatus to a remote server, wherein the apparatus is arranged, in use, to move along the surface and transfer data representative of one or more parameters of the surface to a remote server, **characterised in that** the one or more sensors of the detection unit comprises a friction meter (23) arranged to measure and output data representative of a friction level of the surface.

2. An apparatus according to claim 1 wherein the detection unit further comprises a terrain sensor (21) operable to scan and detect terrain surrounding the apparatus, wherein the terrain sensor comprises a LIDAR module arranged to scan and detect the surroundings of the apparatus, and output data representative of the surroundings of the apparatus.

3. An apparatus according to claim 2 wherein the drive unit is arranged to use data derived from the terrain sensor to navigate and autonomously effect movement of the apparatus on the surface.

4. An apparatus according to any preceding claim wherein the transceiver of the communications unit is operable to receive instruction information from a remote server, and the communications unit is arranged, in use, to communicate the instruction information to one or more of the drive unit and the detection unit.

5. An apparatus according to any preceding claim wherein the friction meter comprises a friction measurement wheel (23a) arranged, in use, to be in contact with the surface.

6. An apparatus according to claim 5 wherein wherein the drive unit comprises a plurality of independently steerable drive wheels (11) powered by one or more motors and one or more of the drive wheels of the drive unit are used as the friction measurement wheel of the detection unit.

7. An apparatus according to claim 1 wherein the friction meter comprises an optical module arranged to provide a measurement of the runway surface friction, preferably wherein the optical module comprises an infrared source.

8. An apparatus according to any preceding claim wherein the one or more sensors of the detection unit comprises an FOD sensor (22) arranged, in use, to detect the presence of foreign object debris, FOD, on the surface.

9. An apparatus according to any preceding claim wherein the detection unit comprises one or more measurement devices selected from a group comprising of:
a transmissometer, operable to measure an ambient attenuation of light and output data representative of runway visibility;
a fire detector, having an infrared sensor arranged, in use, to monitor ambient thermal radiation and detect fires;
a runway light detector, arranged to detect the presence of runway lights and check the proper functioning of lights on the runway; and
an infrared thermal sensor, for detecting the surface temperature of the runway surface.

10. An apparatus according to any preceding claim wherein the apparatus further comprises a maintenance unit (40) arranged, in use, to perform maintenance operations on the surface, the maintenance unit further comprises a wildlife repeller arranged, in use, to repel wildlife proximal to the surface, the repeller comprising one or more of:
a laser source operable to emit a laser light;
a speaker operable to emit a high-frequency sound; and
a spray nozzle operable to output a spray of wildlife repelling chemicals.

11. An apparatus according to claim 10 wherein the laser source of the maintenance unit is also operable as a laser source of a transmissometer operable to measure an ambient attenuation of light and output data representative of runway visibility.

12. An apparatus according to any of claims 1 to 9 wherein the apparatus further comprises a maintenance unit arranged, in use, to perform maintenance operations on the surface, the maintenance unit further comprises a fire extinguisher, comprising an extinguishing agent tank and an extinguisher nozzle, operable to controllably release an extinguishing agent from the extinguishing agent tank, and wherein the fire extinguisher is arranged to actuate the release of extinguishing agent from the extinguishing agent tank according to data derived from an infrared sensor in the detection unit.

13. An apparatus according to any preceding claim wherein a surface of the apparatus is provided with one or more interface parts for mounting components onto the apparatus, wherein at least a portion of the detection unit is removably attached to the apparatus via the one or more interface parts, and preferably the interface parts comprises one or more rails which allow components to be mounted to the apparatus by sliding action.

14. An apparatus according to any preceding claim wherein the detection unit is arranged such that each time a measurement is taken by the sensors location data is recorded so as to link each measurement with the location of the apparatus, wherein an on-board processor is arranged to receive data from the detection unit and map each measurement to a map of the runway.

15. A system for monitoring and maintaining runway and taxiway conditions, comprising:
an apparatus according to any preceding claim; and
a remote server arranged, in use, to transfer data to and from the communications module of the apparatus, via a wired or wireless connection.

16. A system according to claim 15 further comprising a docking station, the docking station (2) being arranged, in use, to receive the apparatus within its volume, wherein the docking station is operable to provide electrical power to the apparatus.

17. A method of monitoring aerodrome runway and taxiway conditions comprising the steps of:
deploying an apparatus according to any of claims 1 to 14 to a runway or taxiway;
collecting runway condition data through the detection unit of the apparatus; and
transferring data derived from the detection unit to a remote server, where the data can be processed and displayed.

## Patentansprüche

1. Flughafenwartungseinrichtung (1) zum Überwachen der Zustände von Landebahnen und Rollbahnen und Fernmelden des Status der Landebahn oder Rollbahn, wobei die Einrichtung Folgendes umfasst:
eine Fahreinheit (10), die betriebsfähig ist, selbstgesteuerte Rollbewegung der Einrichtung entlang einer Oberfläche einer Landebahn oder Rollbahn des Flughafens vorzusehen;
eine Detektionseinheit (20), die einen oder mehrere Sensoren (21-23) umfasst, die so konfiguriert sind, dass sie einen oder mehrere Parameter der Oberfläche detektieren; und
eine Kommunikationseinheit (30), die einen Sendeempfänger (31) umfasst, der so eingerichtet ist, dass er Daten, die von der Detektionseinheit abgeleitet werden, von der Einrichtung an einen ferngelegenen Server überträgt, wobei
die Einrichtung so eingerichtet ist, dass sie sich in Verwendung entlang der Oberfläche bewegt und Daten, die einen oder mehrere Parameter der Oberfläche angeben, an einen ferngelegenen Server überträgt, **dadurch gekennzeichnet, dass** der eine oder die mehreren Sensoren der Detektionseinheit ein Reibungsmessgerät (23) umfassen, das so eingerichtet ist, dass es Daten misst und ausgibt, die einen Reibungsgrad der Oberfläche angeben.

2. Einrichtung nach Anspruch 1, wobei die Detektionseinheit weiter einen Geländesensor (21) umfasst, der betriebsfähig ist, Gelände abzutasten und zu detektieren, das die Einrichtung umgibt, wobei der Geländesensor ein LIDAR-Modul umfasst, das so eingerichtet ist, dass es die Umgebungen der Einrichtung abtastet und detektiert und Daten ausgibt, die die Umgebungen der Einrichtung angeben.

3. Einrichtung nach Anspruch 2, wobei die Antriebseinheit so eingerichtet ist, dass sie Daten verwendet, die von dem Geländesensor abgeleitet werden, um zu navigieren und autonom Bewegung der Einrichtung auf der Oberfläche zu bewirken.

4. Einrichtung nach einem vorstehenden Anspruch, wobei der Sendeempfänger der Kommunikationseinheit betriebsfähig ist, Anweisungsinformationen von einem ferngelegenen Server zu empfangen, und die Kommunikationseinheit so angeordnet ist, dass sie in Verwendung die Anweisungsinformationen an eine oder mehrere der Antriebseinheit und der Detektionseinheit kommuniziert.

5. Einrichtung nach einem vorstehenden Anspruch, wobei das Reibungsmessgerät ein Reibungsmessrad (23a) umfasst, das so eingerichtet ist, dass es in Verwendung mit der Oberfläche in Kontakt ist.

6. Einrichtung nach Anspruch 5, wobei die Antriebseinheit eine Vielzahl von unabhängig steuerbaren Antriebsrädern (11) umfasst, die von einem oder mehreren Motoren angetrieben werden, und ein oder mehrere der Antriebsräder der Antriebseinheit als das Reibungsmessrad der Detektionseinheit verwendet werden.

7. Einrichtung nach Anspruch 1, wobei das Reibungsmessgerät ein optisches Modul umfasst, das so eingerichtet ist, dass es eine Messung der Rollbahnoberflächenreibung vorsieht, wobei bevorzugt das optische Modul eine Infrarotquelle umfasst.

8. Einrichtung nach einem vorstehenden Anspruch, wobei der eine oder die mehreren Sensoren der Detektionseinheit einen FOD-Sensor (22) umfassen, der so eingerichtet ist, dass er in Verwendung das Vorhandensein von Fremdkörpern, FOD, auf der Oberfläche detektiert.

9. Einrichtung nach einem vorstehenden Anspruch, wobei die Detektionseinheit eine oder mehrere Messvorrichtungen umfasst, die aus einer Gruppe ausgewählt werden, die Folgendes umfasst:
ein Transmissometer, das betriebsfähig ist, eine Umgebungsdämpfung von Licht zu messen und Daten auszugeben, die eine Landebahnsichtbarkeit angeben;
einen Feuerdetektor, der einen Infrarotsensor aufweist, der so angeordnet ist, dass er in Verwendung Umgebungswärmestrahlung überwacht und Feuer detektiert;
einen Landebahnlichtdetektor, der so eingerichtet ist, dass er das Vorhandensein von Landebahnlichtern detektiert und die ordentliche Funktion von Lichtern auf der Landebahn prüft; und
einen Infrarotwärmesensor, um die Oberflächentemperatur der Landebahnoberfläche zu detektieren.

10. Einrichtung nach einem vorstehenden Anspruch, wobei die Einrichtung weiter eine Wartungseinheit (40) umfasst, die so angeordnet ist, dass sie in Verwendung Wartungsbetriebe an der Oberfläche durchführt, wobei die Wartungseinheit weiter eine Wildtierabschreckung umfasst, die so eingerichtet ist, dass sie in Verwendung Wildtiere nahe der Oberfläche abschreckt, wobei die Abschreckung eines oder mehreres des Folgenden umfasst:
eine Laserquelle, die betriebsfähig ist, ein Laserlicht zu emittieren;
einen Lautsprecher, der betriebsfähig ist, einen hochfrequenten Ton zu emittieren; und
eine Sprühdüse, die betriebsfähig ist, einen Sprühstoß von wildtierabschreckenden Chemikalien auszugeben.

11. Einrichtung nach Anspruch 10, wobei die Laserquelle der Wartungseinheit auch als eine Laserquelle eines Transmissometers betriebsfähig ist, der betriebsfähig ist, eine Umgebungsdämpfung von Licht zu messen und Daten auszugeben, die Landebahnsichtbarkeit angeben.

12. Einrichtung nach einem der Ansprüche 1 bis 9, wobei die Einrichtung weiter eine Wartungseinheit umfasst, die so eingerichtet ist, dass sie in Verwendung Wartungsbetriebe an der Oberfläche durchführt, wobei die Wartungseinheit weiter einen Feuerlöscher umfasst, der einen Löschmitteltank und eine Löscherdüse umfasst, betriebsfähig, steuerbar ein Löschmittel aus dem Löschmitteltank freizusetzen, und wobei der Feuerlöscher so eingerichtet ist, dass er die Freisetzung von Löschmittel aus dem Löschmitteltank gemäß Daten betätigt, die von einem Infrarotsensor in der Detektionseinheit abgeleitet werden.

13. Einrichtung nach einem vorstehenden Anspruch, wobei eine Oberfläche der Einrichtung mit einem oder mehreren Anschlussteilen versehen ist, um Komponenten auf der Einrichtung zu montieren, wobei zumindest ein Teil der Detektionseinheit über den einen oder die mehreren Anschlussteile abnehmbar an der Einrichtung befestigt ist und bevorzugt die Anschlussteile eine oder mehrere Schienen umfassen, die ermöglichen, dass Komponenten durch einen Schiebevorgang an der Einrichtung montiert werden.

14. Einrichtung nach einem vorstehenden Anspruch, wobei die Detektionseinheit so eingerichtet ist, dass jedes Mal, wenn eine Messung von den Sensoren vorgenommen wird, Standortdaten aufgezeichnet werden, um jede Messung mit dem Standort der Einrichtung zu verknüpfen, wobei ein eingebauter Prozessor so eingerichtet ist, dass er Daten von der Detektionseinheit empfängt und jede Messung auf einer Karte der Landebahn abbildet.

15. System zum Überwachen und Warten von Zuständen von Landebahnen und Rollbahnen, umfassend:
eine Einrichtung nach einem vorstehenden Anspruch; und
einen ferngelegenen Server, der so eingerichtet ist, dass er in Verwendung Daten über eine kabelgebundene oder drathlose Verbindung an das und von dem Kommunikationsmodul der Einrichtung überträgt.

16. System nach Anspruch 15, weiter umfassend eine Andockstation, wobei die Andockstation (2) so eingerichtet ist, dass sie in Verwendung die Einrichtung innerhalb ihres Volumens aufnimmt, wobei die Andockstation betriebsfähig ist, die Einrichtung mit elektrischer Leistung zu versehen.

17. Verfahren zum Überwachen von Zuständen von Flughafenlandebahnen und - rollbahnen, umfassend die Schritte:
Einsetzen einer Einrichtung nach einem der Ansprüche 1 bis 14 auf einer Landebahn oder Rollbahn;
Sammeln von Landebahnzustandsdaten durch die Detektionseinheit der Einrichtung; und
Übertragen von Daten, die von der Detektionseinheit abgeleitet werden, an einen ferngelegenen Server, wo die Daten verarbeitet und angezeigt werden können.

## Revendications

1. Appareil de maintenance d'aérodrome (1) pour surveiller des conditions de piste et de voie de circulation et signaler à distance l'état de la piste ou de la voie de circulation, l'appareil comprenant :
une unité d'entraînement (10) pouvant fonctionner pour fournir un mouvement de roulement autocommandé de l'appareil le long d'une surface d'une piste ou d'une voie de circulation de l'aérodrome ;
une unité de détection (20) comprenant un ou plusieurs capteurs (21-23) configurés pour détecter un ou plusieurs paramètres de la surface ;
une unité de communication (30) comprenant un émetteur-récepteur (31) agencé pour transférer des données dérivées de l'unité de détection de l'appareil à un serveur distant, dans lequel
l'appareil est agencé, lors de l'utilisation, pour se déplacer le long de la surface et transférer des données représentatives d'un ou de plusieurs paramètres de la surface à un serveur distant, **caractérisé en ce que** les un ou plusieurs capteurs de l'unité de détection comprennent un compteur de friction (23) agencé pour mesurer et délivrer des données représentatives d'un niveau de friction de la surface.

2. Appareil selon la revendication 1 dans lequel l'unité de détection comprend en outre un capteur de terrain (21) capable de balayer et de détecter le terrain entourant l'appareil, dans lequel le capteur de terrain comprend un module LIDAR agencé pour balayer et détecter les environs de l'appareil et délivrer des données représentatives des environs de l'appareil.

3. Appareil selon la revendication 2 dans lequel l'unité d'entraînement est agencée pour utiliser des données dérivées du capteur de terrain pour naviguer et effectuer de manière autonome le mouvement de l'appareil sur la surface.

4. Appareil selon une quelconque revendication précédente, dans lequel l'émetteur-récepteur de l'unité de communication peut fonctionner pour recevoir des informations d'instruction d'un serveur distant, et l'unité de communication est agencée, lors de l'utilisation, pour communiquer les informations d'instruction à une ou plusieurs de l'unité d'entraînement et de l'unité de détection.

5. Appareil selon une quelconque revendication précédente, dans lequel le compteur de friction comprend une roue de mesure de friction (23a) agencée, lors de l'utilisation, pour être en contact avec la surface.

6. Appareil selon la revendication 5, dans lequel l'unité d'entraînement comprend une pluralité de roues motrices orientables indépendamment (11) actionnées par un ou plusieurs moteurs, et une ou plusieurs des roues motrices de l'unité d'entraînement sont utilisées comme la roue de mesure de friction de l'unité de détection.

7. Appareil selon la revendication 1, dans lequel le compteur de friction comprend un module optique agencé pour fournir une mesure de friction de la surface de la piste, de préférence dans lequel le module optique comprend une source infrarouge.

8. Appareil selon une quelconque revendication précédente, dans lequel le ou les capteurs de l'unité de détection comprennent un capteur FOD (22) conçu, lors de l'utilisation, pour détecter la présence de débris de corps étrangers (FOD) sur la surface.

9. Appareil selon une quelconque revendication précédente, dans lequel l'unité de détection comprend un ou plusieurs dispositifs de mesure choisis dans un groupe comprenant :
un transmissiomètre, capable de mesurer une atténuation ambiante de la lumière et de fournir des données représentatives de la visibilité de la piste ;
un détecteur d'incendie présentant un capteur infrarouge conçu, lors de l'utilisation, pour surveiller le rayonnement thermique ambiant et détecter les incendies ;
un détecteur de feux de piste, conçu pour détecter la présence de feux de piste et vérifier le bon fonctionnement des feux sur la piste ; et
un capteur thermique infrarouge, pour détecter la température de surface de la surface de la piste.

10. Appareil selon une quelconque revendication précédente, dans lequel l'appareil comprend en outre une unité de maintenance (40) conçue, lors de l'utilisation, pour effectuer des opérations de maintenance sur la surface, l'unité de maintenance comprend en outre un répulsif pour animaux sauvages conçu, lors de l'utilisation, pour repousser les animaux sauvages à proximité de la surface, le répulsif comprenant un ou plusieurs éléments parmi :
une source laser capable d'émettre une lumière laser ;
un haut-parleur capable d'émettre un son à haute fréquence ; et
une buse de pulvérisation capable de pulvériser des produits chimiques répulsifs pour la faune.

11. Appareil selon la revendication 10, dans lequel la source laser de l'unité de maintenance peut également être utilisée comme source laser d'un transmissiomètre capable de mesurer l'atténuation ambiante de la lumière et de fournir des données représentatives de la visibilité de la piste.

12. Appareil selon l'une quelconque des revendications 1 à 9, dans lequel l'appareil comprend en outre une unité de maintenance conçue, lors de l'utilisation, pour effectuer des opérations de maintenance sur la surface, l'unité de maintenance comprend en outre un extincteur, comprenant un réservoir d'agent extincteur et une buse d'extincteur, capable de libérer de manière contrôlée un agent extincteur à partir du réservoir d'agent extincteur, et dans lequel l'extincteur est conçu pour actionner la libération de l'agent extincteur à partir du réservoir d'agent extincteur en fonction des données dérivées d'un capteur infrarouge dans l'unité de détection.

13. Appareil selon une quelconque revendication précédente, dans lequel une surface de l'appareil est pourvue d'une ou plusieurs pièces d'interface pour le montage de composants sur l'appareil, dans lequel au moins une partie de l'unité de détection est fixée de manière amovible à l'appareil par l'intermédiaire d'une ou plusieurs pièces d'interface, et de préférence les pièces d'interface comprennent un ou plusieurs rails qui permettent de monter des composants sur l'appareil par une action de glissement.

14. Appareil selon une quelconque revendication précédente, dans lequel l'unité de détection est agencée de telle sorte que chaque fois qu'une mesure est prise par les capteurs, des données de localisation sont enregistrées de manière à relier chaque mesure à la localisation de l'appareil, dans lequel un processeur embarqué est agencé pour recevoir les données de l'unité de détection et cartographier chaque mesure sur une carte de la piste.

15. Système de surveillance et de maintien de l'état des pistes et des voies de circulation, comprenant
un appareil selon une quelconque revendication précédente ; et
un serveur à distance agencé, lors de l'utilisation, pour transférer des données vers et depuis le module de communication de l'appareil, par l'intermédiaire d'une connexion filaire ou sans fil.

16. Système selon la revendication 15, comprenant en outre une station d'accueil, la station d'accueil (2) étant conçue, lors de l'utilisation, pour recevoir l'appareil dans son volume, dans lequel la station d'accueil peut fournir une alimentation électrique à l'appareil.

17. Procédé de surveillance de l'état des pistes et voies de circulation d'un aérodrome comprenant les étapes suivantes :
déployer un appareil selon l'une quelconque des revendications 1 à 14 sur une piste ou une voie de circulation ;
recueillir des données sur l'état de la piste par l'intermédiaire de l'unité de détection de l'appareil ; et
transférer des données dérivées de l'unité de détection vers un serveur distant, où les données peuvent être traitées et affichées.
